# EUROPEAN PATENT APPLICATION

(11) **EP 2 034 314 A1**
(43) Date of publication of application: **11.03.2009**
(21) Application number: 08014320.9
(22) Date of filing: 11.08.2008
(51) Int. Cl.: G01N 33/84, A23G 4/00, A23G 4/02

(54) **Chewing determination kit and chewing determination method**

(30) Priority: 21.08.2007 JP 2007215138
(71) Applicant: GC Corporation, Itabashi-ku Tokyo 174-8585 (JP)
(72) Inventor: Abiru, Masao, Itabashi-ku, Tokyo (JP); Kato, Shinichi, Itabashi-ku, Tokyo (JP)
(74) Representative: Müller-Boré & Partner Patentanwälte

(57) **Abstract**

To provide a chewing evaluation method capable of easily measuring chewing by an easy method without using a special expensive apparatus, together with a chewing determination kit, the chewing determination kit comprises testing food which contains ascorbic acid, an ascorbic acid derivative, and/or ethanol as detection components, and an indicator reactive with the components, based on a fact that there appears a difference in a leaching out state of components for chewing determination depending on a chewing degree when testing food containing the components for chewing determination is used as a factor which is necessary for chewing determination in a wide sense but lacks in the conventional chewing determination method.

## Description

The present invention relates to a chewing determination kit for evaluating chewing ability of human being, and a chewing determination method using it.

Needless to say, proper chewing is a basic action necessary for keeping life activity. Chewing has not only functions of cutting, pulverizing, and mixing food so as to easily swallow the food, but also functions of irritating an oral cavity so as to promote secretion of digestive liquid in each of internal organs, self cleaning an oral cavity, and removing foreign matters invaded into an oral cavity with food. Further, when a person has a problem in chewing, this problem may be caused by various diseases in an oral cavity, e.g., dental caries, periodontosis, temporomandibular joint disorder, unsuitable denture, and unsuitable occlusion. Therefore, when there is no proper chewing, it is supposed that an oral cavity has abnormality or diseases, and thus such the problem must be treated.

It is no exaggeration to say that, if such the symptom is neglected, the diseases in an oral cavity will affect the whole body so as to make keeping of life activity to be unstable and dangerous. Therefore, it will affect life keeping activity directly and indirectly to detect whether proper chewing is carried out or not at an early stage by an easy and exact means. Conventional typical methods for evaluating chewing functions of a subject are as follows.
1. There is a chewing determination method including the steps of chewing 3 g of dried peanuts, for example, for a fixed time, taking distilled water in an oral cavity, wholly collecting fragments of pulverized peanuts remaining in the oral cavity and fragments of pulverized peanuts remaining on the teeth surfaces, shifting grains of the collected fragments of pulverized peanuts onto a sieve having a specified mesh (e.g., 10 mesh), washing the grains in flowing water, collecting the grains remaining on the sieve , drying the grains for a fixed time at a fixed temperature by a constant temperature drier, weighing the dried grains, calculating a ratio of the weight of grains passed through the sieve with respect to the whole weight to define the result as a chewing valve, and comparing the calculated chewing value with data previously collected. This method is useful for determining chewing functions to pulverize and mix food, which occupy a large part in the chewing functions. However, by this method, chewing functions cannot be easily measured in a short time because of having a complicated process.
2. There is a method using a discoloring chewing gum to determine chewing (e.g., refer to Unexamined Japanese Patent Publication No. 02-308759). In this method, the color of the gum is green before chewing because of having acidity due to an acid slightly blended in the gum. When the chewing gum is mixed with saliva by chewing and biting, the color of the gum is changed in the order of green, orange, and red according to progressing of neutralization of the acid. This change is used for determination of chewing. This method is useful for determining a chewing function of mixing which is necessary in chewing, and has an advantage that the chewing function can be easily determined in a short time. However, this method cannot satisfy quantitative determination.
3. There is a method to measure a gummy jelly containing a pigment, which is flowed out by chewing, after chewing by a colorimetric method with using a spectrophotometer (e.g., refer to Unexamined Japanese Patent Publication No. 06-167452). This method is useful for determining chewing functions in a mixing process. However, this method needs an expensive measurement apparatus such as a spectrophotometer, and thus is not a method available everywhere and everytime.
4. As mechanical checking methods in a chewing determination method, there are a method to mechanically measure chewing force by directly attaching various kinds of sensors in an oral cavity (e.g., refer to Unexamined Japanese Patent Publication No. 2001-178706), and a method to indirectly measure chewing from an activity of a muscle or a movement of a jaw which is used for chewing (e.g., refer to Unexamined Japanese Patent Publication No. 2004-033494) . However, since the sensors must be kept in an oral cavity, an actual chewing effect cannot be evaluated. Further, in this method, breathing is prevented during biting measurement, and thus is unsuitable for measuring at the time of a physical exercise in a field. The indirect measurement method includes a method to measure a movement of a jaw, and a method to measure an activity of a chewing muscle used for a jaw movement. As for the measurement of a jaw movement, it is hard to distinguish a movement of a jaw attending with chewing from that attending with utterance and also hard to distinguish a mouth closing state from a biting state. Thus, this measurement is unsuitable for measuring chewing or biting. Furthermore, these methods need special expensive measurement apparatuses, and thus cannot easily evaluate chewing.

An objective of the present invention is to solve various faults of the conventional chewing evaluation methods. In particular, attention has been paid to a fact that there appears a difference in a leaching out state of components for chewing determination depending on a chewing degree, when testing food containing the components for chewing determination is used as a factor which is necessary for chewing determination in a wide sense but lacks in the conventional chewing determination methods. An objective of the present invention is to provide a chewing evaluation method capable of easily measuring such the difference without using a special expensive apparatus, and also to provide a chewing determination kit.

Present inventors carried out earnest works to solve the above-described problems and, as a result, they developed a chewing determination kit capable of easily checking a chewing state by utilizing testing food containing detection components, and an indicator reacted with the respective components.

In particular, the present invention is a chewing determination kit including testing food which contains ascorbic acid, an ascorbic acid derivative, and/or ethanol as detection components, and including an indicator reacted with the components. A determination method includes the steps of making a subject to chew the test food containing ascorbic acid, an ascorbic acid derivative, and/or ethanol as detection components, and detecting concentrations of ascorbic acid, an ascorbic acid derivative, and/or ethanol in saliva of the subj ect by an indicator corresponding to the components.

An operation and a method by the chewing determination kit according to the present invention is easier in comparison with the conventional determination methods, the kit can be used at anytime and anywhere because of not using a special expensive measurement apparatus, and a quantitative result can be obtained to a certain extent. Thus, the chewing determination kit is unique and excellent.

A chewing determination kit according to the present invention includes testing food which contains ascorbic acid, an ascorbic acid derivative, and/or ethanol as detection components, and an indicator reacted with these components. The testing food can stably contain ascorbic acid, an ascorbic acid derivative, and/or ethanol as components which can be detected by the indicator, and is chewable food. For example, the testing food includes soft feel foods such as a gummy and a gum, a little hard feel foods such as a gummy and a wafer which include fibers, and hard feel foods such as a biscuit, a tablet, and a rice cracker.

The testing food contains ascorbic acid, an ascorbic acid derivative, and/or ethanol as detection components. Particularly, ascorbic acid and an ascorbic acid derivative are important factors for the present kit to easily determine whether chewing is accurately done or not. The principle is that the ascorbic acid and/or the ascorbic acid derivative are released in an oral cavity by chewing the testing food at the fixed number of times or chewing for a fixed period, then, the oral cavity is measured with a checking paper containing an indicator which is reacted with the ascorbic acid and/or the ascorbic acid derivative, and a chewing degree can be obtained by the check result. This measurement also can be carried out with ethanol and an indicator to be reacted with ethanol, and can be carried out with a combination of ascorbic acid and ethanol.

Ascorbic acid is easily oxidized or denaturalized, and thus is an unstable material. Thus, conventionally, an ascorbic acid derivative has been widely used. In the present invention, an ascorbic acid derivative can also be used instead of ascorbic acid.

An ascorbic acid derivative used in the present invention includes sodium ascorbate, calcium ascorbate, potassium ascorbate, magnesium ascorbate, isoascorbic acid, sodium isoascorbate, ascorbyl phosphate ester, ascorbyl stearate ester, ascorbic acid 2-phosphate ester 3-sodium, ascorbyl palmitate ester, araboascorbic acid, ascorbic acid 2-glucoside, and ascorbyl magnesium phosphate, and anyone of those can be used. In addition, as for ascorbic acid, any one of L-isomer or D-isomer can be used and the mixed one with two or more kinds can be used.

The ascorbic acid derivative is, for example, a safe and stable vitamin C (having a product name of AA-2G, produced by AscorBio Lab. Corp., or having a product name of AscoFresh, produced by Hayashihara Shoji, Inc.). The safe stable vitamin C is obtained by making a hydroxyl group of vitamin C, which is conventionally unstable, into glucose, and is stable for a long period of time even when the material includes the vitamin C as a chewing determination material. Further, the safe and stable vitamin C has an advantage of being stable under heat when producing it, and thus being easily used. The safe and stable vitamin C is hydrolyzed to be glucose and vitamin C with maltase as enzyme and/or acid having pH of 3 or lower. Saliva includes maltase. When the chewing determination material internally containing the safe and stable vitamin C, as a chewing determination kit, is chewed, maltase in saliva and the safe and stable vitamin C are contacted so as to be hydrolyzed, and then vitamin C is released. Then, the released vitamin C is detected by the discoloring degree of a vitamin C testing paper (e.g., produced by Kyoritsu Chemical-Check Lab., Corp.) so that chewing is determined by the chewing degree of pseudo food in the chewing determination kit and the mixing degree of the food with saliva.

The total content of ascorbic acid, an ascorbic acid derivative, and ethanol is preferably 0.05 to 10% by weight in testing food. When the content is lower than 0.05% by weight, determination with an indicator may be not clear. When the content is higher than 10% by weight, precision of chewing determination decreases, and the taste also decreases. Further, preservation stability of food decreases.

When ascorbic acid, an ascorbic acid derivative, and/or ethanol are blended in testing food, these can be mixed in testing food as they are, but each component can be dispersed in food by utilizing micro capsules. Particularly, when ascorbic acid and/or an ascorbic acid derivative are blended as they are in testing food containing much water such as a gummy or a jelly, these components are dissolved in the food so as to be oxidized or to lose their activities in a short period of time. Thus, the components are preferably blended in the state of being micro encapsulated, or granulated as described below.

A method for forming micro capsules may be anyone of an interfacial polymerization, an in-situ polymerization, an in-liquid curing and covering method, a phase separation method, a coacervation method, and a spray drying method.

When ascorbic acid, an ascorbic acid derivative, and/or ethanol are blended in testing food, these can be mixed in testing food as they are, but each component can be dispersed in food by the shape of granules. Particularly, when ascorbic acid and/or an ascorbic acid derivative are blended as they are in testing food containing much water such as a gummy or a jelly, these components are dissolved in the food so as to be oxidized or to lose their activities in a short period of time. Thus, the components are preferably contained in granules. More particularly, there is a method of blending ascorbic acid, an ascorbic acid derivative, and/or ethanol in solid food not containing water, finely pulverizing the food so as to make granules, and then blending these granules in testing food.

Methods for forming granules include a method that food containing ascorbic acid, an ascorbic acid derivative, and/or ethanol is granulated with using a granulating device through a compression molding method, a pressurizing extruding method, or a punching method, and a method that a powder material is formed into a large tablet, a block of pellet, or a plate and then pulverized or punched so as to form granules.

The size of the micro capsule or granule containing ascorbic acid, an ascorbic acid derivative, and/or ethanol is preferably 0.05 to 3 mm. When the size is smaller than 0.05 mm, the granule is hardly broken by chewing so as to hardly release the components. When the size is larger than 3 mm, the components are easily released by slight chewing. In both the cases, the chewing determination material may hardly detect chewing.

In addition, the testing food of a chewing determination kit according to the present invention can contain, if necessary, various kinds of additives, e.g., a buffer, a sweetener, a coloring agent, a preservative, an antiseptic, an antifungal agent, a pH adjusting agent, and a perfume which are broadly used for compositions for oral cavity conventionally.

As for the indicator used for the chewing determination kit according to the present invention, there is an indicator of ascorbic acid and/or an ascorbic acid derivative, which is an indicator capable of monitoring color change of an oxidation-reduction indicator by using reducing force of ascorbic acid. As for quantifying of ascorbic acid, a quantifying method using 2, 6-dichlorophenolindophenol is a general testing method. In addition, the indicator can be various kinds of oxidation-reduction indicators, e.g., methylene blue, methylene viologen, toluidine blue, phenosafranine, indigotetrasulfonate, diphenylamine, diphenylbenzidine, diphenylaminesulfonate, ferroin, eroglaucine A, and methylferroin. A detection method can be anyone of a titration method using a solution, a colorimetric method that color of an indicator is compared with a color sample of a discoloring indicator for which a concentration of ascorbic acid is previously measured, and a detection paper method using a filter paper impregnated with a discoloring indicator as an application of the colorimetric method. However, the detection paper method is preferable from the viewpoints of easy evaluation which is an aspect of the present invention.

As for an indicator of ethanol as the indicator used for the chewing determination kit according to the present invention, anyone of a method using a semiconductor sensor, a method using gas chromatography, and a method using a testing paper for detection can be used. However, the detection paper method using a testing paper for detection is preferable from the viewpoints of easy measurement which is an aspect of the present invention. As for a testing paper for detecting ethanol, a method called as an enzyme method is generally used. In the enzyme method, an enzyme capable of detecting ethanol (e.g., alcohol dehydrogenase or alcohol oxidase) and a suitable coloring reagent (e.g., a ferricyanic compound or a formazan pigment) are impregnated in a filter paper, and the pigment is oxidized/reduced at the time when ethanol and the enzyme react, so as to be discolored.

The present invention will be described in detail below with reference to examples and comparative examples, but the present invention is not limited to these examples.

### <Example 1>

### [Testing Food 1]

Gelatin: 24.3 g
Water: 73 g
Xylitol: 1 g
Lemon flavor: 0.6 g
Saccharine: 0.1 g

A gummy state testing food 1 was made by uniformly dissolving these materials while heating them, adding 1 g of granules containing ascorbic acid^{*1} to the mixture so as to be uniformly mixed while stirring it, taking 1 g of the mixture into every mold, and cooling these molds at a room temperature.

### <Example 2>

### [Testing Food 2]

Gelatin: 40 g
Water: 53.3 g
Xylitol: 1 g
Wheat fiber: 4 g
Mint flavor: 0.6 g
Saccharine: 0.1 g

A gummy state testing food 2 was made by processing these materials in a similar process to that of Example 1.

### <Example 3>

### [Testing Food 3]

Mannitol: 58.8 g
Sorbitol: 18 g
Xylitol: 2 g
Carboxymethyl cellulose sodium salt: 15 g
Sugar ester: 4 g
Saccharine: 0.3 g
Mint flavor: 0.9 g

A solid testing food 3 was made by stirring and mixing these materials to be uniform, adding 1 g of granules containing ascorbic acid^{*1} to the mixture, lightly stirring the mixture, and pressurizing every 1 g of the mixture by a pressurizer.

### [^{*1} Granules containing ascorbic acid]

L- ascorbic acid: 30% by weight
Maltitol: 50% by weight
Sorbitol: 10% by weight
Carboxymethyl cellulose: 7% by weight
Sugar ester: 3% by weight

A solid material was made by stirring and mixing these materials in the above-described blending ratio, and pressurizing the mixture by a pressurizer. Then, granules containing ascorbic acid were made by finely pulverizing the solid material so as to have the size of approximately 1 mm.

### <Example 4>

### [Testing Food 4]

Agar: 23 g
Water: 69 g
Xylitol: 4 g
Sucrose: 2.4 g
Lemon flavor: 0.6 g

A gummy state testing food 4 was made by uniformly dissolving these materials while heating them, adding 1 g of micro capsules internally containing L-ascorbic acid^{*2} to the mixture so as to be uniform while stirring it, taking 1 g of the mixture to every mold, and cooling these molds at a room temperature.

### <Example 5>

### [Testing Food 5]

Gelatin: 20.8 g
Water: 70.2 g
Xylitol: 5 g
Blueberry flavor: 1.5 g
Sucrose: 1.5 g

A gummy state testing food 5 was made by processing these materials in a similar process to that of Example 4.

### <Example 6>

### [Testing Food 6]

Gelatin: 49 g
Water: 40 g
Xylitol: 5 g
Peat fiber: 4 g
Blueberry flavor: 0.4 g
Sucrose: 0.6 g

A gummy state testing food 6 was made by processing these materials in a similar process to that of Example 4.

### <Example 7>

### [Testing Food 7]

Mannitol: 66.2 g
Sorbitol: 10 g
Xylitol: 2 g
Starch: 15 g
Sugar ester: 3 g
Sucrose: 1.3 g
Blueberry flavor: 0.7 g

A solid testing food 7 was made by stirring and mixing these materials so as to be uniform, adding 1.8 g of micro capsules internally containing L-ascorbic acid^{*2} to the mixture, lightly stirring the mixture, and pressurizing every 1 g of the mixture by a pressurizer. [^{*2} Micro capsules internally containing L-ascorbic acid]

Micro capsules internally containing L-ascorbic acid were made by adding 2 g of L-ascorbic acid to 1 g of perilla oil to be stirred, mixing the mixture into 8 g of an aqueous solution of 1% by weight of sodium alginate, dropping the mixture into an aqueous solution of 1% by weight of a calcium chloride by a pipet while stirring the mixture, collecting formed small spherical bodies, and drying them by air blowing.

### <Example 8>

### [Testing Food 8]

Agar: 20 g
Water: 70.4 g
Xylitol: 5 g
Orange flavor: 1.5 g
Sucrose: 1.5 g

A gummy state testing food 8 was made by uniformly dissolving these materials while heating them, adding 1.6 g of micro capsules internally containing L-sodium ascorbate^{*3} to the mixture so as to be uniform while stirring it, taking 1 g of the mixture to every mold, and cooling the molds at a room temperature.

### <Example 9>

### [Testing Food 9]

Agar: 37 g
Water: 49.4 g
Xylitol: 5 g
Barley fiber: 4 g
Orange flavor: 1.5 g
Sucrose: 1.5 g

A gummy state testing food 9 was made by processing these materials in a similar process to that of Example 8.

### <Example 10>

### [Testing Food 10]

Maltitol: 66 g
Erythritol: 10 g
Xylitol: 2 g
Starch: 15 g
Sugar ester: 3 g
Sucrose: 1.4 g
Orange flavor: 1 g

A solid testing food 10 was made by stirring and mixing these materials so as to be uniform, adding 1.6 g of micro capsules internally containing L-sodium ascorbate^{*3} to the mixture, lightly stirring the mixture, and pressurizing every 1 g of the mixture by a pressuri zer. [^{*3} Micro capsules internally containing L-sodium ascorbate]

Micro capsules internally containing L-sodium ascorbate were made by adding 2 g of L-sodium ascorbate to 1 g of safflower oil to be stirred, mixing the mixture into 8 g of an aqueous solution of 1% by weight of sodium alginate, dropping the mixture into a solution of 1% by weight of calcium chloride by a pipet while stirring the mixture, collecting formed small spherical bodies, and drying it by air blowing.

### <Example 11>

### [Testing Food 11]

Gelatin: 20 g
Water: 64.3 g
Glycerine: 10 g
Xylitol: 3 g
Lemon flavor: 1 g
Saccharine: 0.2 g

A gummy state testing food 11 was made by uniformly dissolving these materials while heating them, adding 1.5 g of granules containing L- ascorbic acid-ethanol^{*4}, which were pulverized to have the size of approximately 1 mm, while stirring the mixture to be uniform, taking 1 g of the mixture to every mold, and cooling the molds at a room temperature.

### <Example 12>

### [Testing Food 12]

Gelatin: 40 g
Water: 48.8 g
Xylitol: 4.5 g
Corn fiber: 4 g
Lemon flavor: 1 g
Saccharine: 0.2 g

A gummy state testing food 12 was made by processing these materials in a similar process to that of Example 12.

### <Example 13>

### [Testing Food 13]

Maltitol: 58.5 g
Erythritol: 15 g
Xylitol: 5 g
Starch: 15 g
Sugar ester: 4 g
Saccharine: 0.3 g
Mint flavor: 0.7 g

A solid testing food 13 was made by stirring and mixing these materials so as to be uniform, adding 1.5 g of granules containing L- ascorbic acid-ethanol^{*4}, which were pulverized to have the size of approximately 1 mm, lightly stirring the mixture, and pressurizing every 1 g of the mixture by a pressurizer.

### [^{*4} granules containing L- ascorbic acid-ethanol]

A solid material was made by uniformly stirring and mixing 30 g of L- ascorbic acid, 47 g of maltitol, 10 g of sorbitol, 7 g of carboxymethyl cellulose, and 3 g of sugar ester, adding 3 g of ethanol to the mixture, stirring and mixing again the mixture, and pressurizing themixturebyapressurizer. Then, granules containing L- ascorbic acid-ethanol were made by pulverizing the solid material so as to have the size of approximately 1 mm.

### « L-ascorbic acid indicator and a measurement method»

After each testing food was chewed 5 times and 30 times, the food was collected with saliva to a collecting container. Then, an oral cavity was gargled with 5 mL of distilled water, and the water was also collected to the collecting container. A commercial vitamin C testing paper TPA-VC (produced by Kyoritsu Chemical-Check Lab., Corp.) was dipped in a sample of a chewed residue in the collecting container for 15 seconds, and then taken out. After 1 minute elapsed, the color of the testing paper was compared with a standard color, and a value of a similar color was made to be an easy quantitative value of L-ascorbic acid.

### «Ethanol indicator and a measurement method»

These were carried out separately from the above-described L-ascorbic acid indicator and measurement method. After each pseudo food was chewed 5 times and 30 times, the food was collected with saliva to a collecting container. Then an oral cavity was gargled with 5 mL of distilled water, and the water was also collected to the collecting container. A commercial ethanol testing paper (the product name: Saliva Alcohol Test, produced by Accuracy-One Corporation) was dipped in a sample of a chewed residue in the collecting container for 15 seconds, and then taken out. After 2 minutes elapsed, the color of the testing paper was compared with a standard color, and a value of a similar color was made to be an easy quantitative value of ethanol.

These results were collectively shown in Table 1.

**<Table 1> Test Results**

| | L-Ascorbic Acid Amount (mg/L) | | Ethanol Amount (%) | |
|---|---|---|---|---|
| | Chewing 5 times | Chewing 30 times | Chewing 5 times | Chewing 30 times |
| Example 1 | 75 | 1000 | | |
| Example 2 | 50 | 1000 | | |
| Example 3 | 50 | 1000 | | |
| Example 4 | 50 | 1000 | | |
| Example 5 | 100 | 1000 | | |
| Example 6 | 75 | 1000 | | |
| Example 7 | 50 | 1000 | | |
| Example 8 | 75 | 1000 | | |
| Example 9 | 50 | 1000 | | |
| Example 10 | 50 | 1000 | | |
| Example 11 | 100 | 1000 | 0.05 | 0.2 |
| Example 12 | 75 | 1000 | 0.05 | 0.2 |
| Example 13 | 75 | 1000 | 0.02 | 0.2 |

As for the ascorbic acids and/or the ascorbic acid derivatives, since these testing methods were an easy method by only observing monitored color change of a commercial detection paper, the concentration values were rough results. However, it was found out that there was a difference in the leaching amount of ascorbic acid depending on the degree of chewing. Examples 11 to 13 included ethanol. In cases of having chewed 30 times, every example showed the large amount ethanol, and thus chewing was proper. Further, the amount of ethanol at the time of having chewed 5 times was clearly lower than that at the time of having chewed 30 times. Therefore, it was found out that there is a difference also in the detection amount of ethanol depending on the degree of chewing.

## Claims

1. A chewing determination kit comprising: testing food containing ascorbic acid, an ascorbic acid derivative, and/or ethanol as detection components; and an indicator reactive with these components.

2. The chewing determination kit as claimed in claim 1,
wherein micro capsules having a particle size of 0.05 to 3 mm contain ascorbic acid, an ascorbic acid derivative, and/or ethanol in the testing food.

3. The chewing determination kit as claimed in claim 1 or 2,
wherein granules having a particle size of 0.05 to 3 mm contain ascorbic acid, an ascorbic acid derivative, and/or ethanol in the testing food.

4. The chewing determination kit as claimed in anyone of claims 1 to 3,
wherein the amount of ascorbic acid, an ascorbic acid derivative, and/or ethanol in the testing food is 0.05 to 10% by weight.

5. A chewing determination method comprising steps of:
making a subject to chew a test food containing ascorbic acid, an ascorbic acid derivative, and/or ethanol as detection components; and
detecting the ascorbic acid, the ascorbic acid derivative, and/or the ethanol in saliva of the subject by an indicator reacted with the components.
